# EUROPÄISCHE PATENTSCHRIFT

(11) **EP 0 523 488 B1**
(45) Veröffentlichungstag und Bekanntmachung des Hinweises auf die Patenterteilung: **26.04.1995**
(21) Anmeldenummer: 92111376.7
(22) Anmeldetag: 04.07.1992
(51) Int. Cl.: B65G 49/08, B28B 5/02, B65G 37/02, B65G 43/00

(54) **Vorrichtung zum Umordnen von Steinformlingen wechselnder Formate**
Device for rearranging of green stones of changing formats
Dispositif pour réarranger des pierres crues de formats changeants

(30) Priorität: 19.07.1991 DE 4123954
(43) Veröffentlichungstag der Anmeldung: 20.01.1993
(73) Patentinhaber: LANGENSTEIN & SCHEMANN GMBH, D-96450 Coburg (DE)
(72) Erfinder: Rüger, Herbert, Dipl.-Ing., D-96277 Schneckenlohe (DE)
(74) Vertreter: Böhme, Volker, Dipl.-Ing.

(56) Entgegenhaltungen:
- DE-A- 3 038 509
- DE-B- 1 608 681
- DE-B- 2 155 535

## Beschreibung

Die Erfindung betrifft eine Vorrichtung zum Umordnen von Steinformlingen wechselnder Formate und Anordnungen, bei der ein einen Entlade-Greiferkopf aufweisendes Entladegerät zwischen einer Formpresse und einem Zwischentransport-Förderband vorgesehen ist und die Steinformlinge in, der Formpresse entnommenen, einander folgenden Pressengruppen auf dem Förderband an dessen erstem Ende ablegt, bei der das Förderband sich nach jedem Ablegen einer Pressengruppe von Steinformlingen mittels eines Bandantriebs um einen Bandschritt weiterbewegt, wobei die Bandschrittweite in Anpassung an das jeweilige Steinformling-Format einstellbar ist, und bei der ein einen Stapel-Greiferkopf aufweisendes Stapelgerät zwischen dem Zwischentransport-Förderband und einer Setzplattform vorgesehen ist und die Steinformlinge in, dem Förderband entnommen, einander folgenden Stapelgruppen von dem Forderband an dessen zweitem Ende abnimmt, gemäß Patentanspruch 1.

Bei einer bekannten DE-A-3 038 509 Vorrichtung dieser Art ist für jedes Steinformling-Format nur eine einzige Bandschrittweite durch Einstellen des Bandantriebes einstellbar. Auf dem Zwischentransport-Förderband folgt jede Reihe von Steinformlingen der vorhergehenden Reihe im gleichen Abstand. Das Zwischentransport-Förderband bildet zwischen dem Entladegerät und dem Stapelgerät eine Transportstrecke, die in ein ganzzahliges Vielfaches der jeweils eingestellten Bandschrittweite derart unterteilbar sein muß, daß bei einem bestimmten Format und der zugehörigen Pressengruppe dem Stapelgerät die passende Stapelgruppe zugeführt wird. Dies ist bei der bekannten Vorrichtung durch Einstellung der jeweiligen Bandschrittweite für eine Vielzahl von Steinformling-Formaten nicht möglich. Um diese Formate zu berücksichtigen, wird die Länge der Transportstrecke vergrößert oder verkleinert, indem das Stapelgerät entlang dem Förderband verschoben wird. Dies ist eine zeitlich und einsatzmäßig aufwendige Maßnahme.

Eine Aufgabe der Erfindung ist es daher, eine Vorrichtung der eingangs genannten Art zu schaffen, bei der bei gleichbleibender Transportstrecke zwischen Entladegerät und Stapelgerät auch solche Steinformling-Formate verarbeitbar sind, deren Pressengruppen bei gleichbleibender Bandschrittweite zu nicht abnehmbaren Stapelgruppen werden. Bei der Vorrichtung arbeitet der Bandantrieb über eine Steuereinrichtung schrittweise in Abhängigkeit von einem Programm eines Rechners arbeitet, in dem verschiedenen Steinformling-Formaten verschiedene Bandschrittweiten zugeordnet sind. Die erfindungsgemäße Vorrichtung ist, diese Aufgabe lösend, **dadurch gekennzeichnet**, daß auf dem Programm einigen Formaten den Pressengruppen folgend abwechselnd kleinere und größere Bandschrittweiten zugeordnet sind und die größere Bandschrittweite nach jeder Stapelgruppe vorgesehen ist, wobei die jeweiligen Bandschrittweiten durch Betätigen von Format-Einstelltasten einstellbar sind.

Die Erfindung sieht also vor, daß bei bestimmten Formaten der einer Pressengruppe zugeordnete Bandschritt bei jeder ersten und ggf. jeder zweiten abgelegten Pressengruppe kleiner ist und bei jeder zweiten ggf. jeder dritten Pressengruppe größer ist. Auf diese Weise ist der Abstand zwischen zwei einander folgenden Stapelgruppen größer als der zwischen zwei einander innerhalb einer Stapelgruppe folgenden Pressengruppen. Durch die Vergrößerung der größeren Bandschritte werden die Verhältnisse so ausgerichtet, daß dem Stapelgerät die Stapelgruppen passend zugeführt werden. Der mit der Erfindung verbundene Aufwand ist zeitlich und einsatzmäßig erheblich verringert. Die Erfindung wird primär in Verbindung mit der Kalksandsteinherstellung verwendet, bei der eine Mischung von Sand, Kalk und Wasser zum Steinformling gepreßt wird.

Die Formpresse wird hinsichtlich Preßform, Auswerfer und Oberwerkzeug je nach gewünschtem Format eingerichtet; diese Werkzeugteile liegen satzweise zum Auswechseln vor. Der Entlade-Greiferkopf und der Stapel-Greiferkopf weisen Greifer auf, die in der Regel als Klemmgreifer ausgebildet sind, um ein zuverlässiges und schnelles Arbeiten der Vorrichtung zu gewährleisten.

Es ist denkbar, die Greifer des Entlade-Greiferkopfes pendelnd einstellbar vorzusehen. Besonders zweckmäßig und vorteilhaft ist es, wenn der Entlade-Greiferkopf an einem Kopfgestell Greifer trägt und wenn die Greifer an dem Kopfgestell mittels Schrauben in verschiedenen Anordnungen anbringbar sind und von diesem entfernbar sind. Diese bekannte Bauweise ist mit zwei oder drei Schwertern verwirklicht und berücksichtigt den vergleichsweise einfachen Aufbau des Entlade-Greiferkopfes.

Es ist möglich, die Greifer des Stapel-Greiferkopfes an einem Kopfgestell verstellbar vorzusehen. Besonders zweckmäßig und vorteilhaft ist es, wenn ein Satz von Stapel-Greiferköpfen mit Greifern in verschiedenen Anordnungen vorgesehen ist. Diese bekannte Bauweise berücksichtigt den vergleichsweise komplizierten Aufbau des Stapel-Greiferkopfes, der eine stark vergrößerte Zahl von Greifern aufweist und die zunächst auf Abstand voneinander angeordneten Steinformlinge auf engeren Raum zusammenzuschieben hat.

Es ist denkbar, die verschiedenen Bandschrittweiten bei jeweils konstanter Bandgeschwindigkeit durch exakte Steuerung der Schrittzeiten zu erreichen. Besonders zweckmäßig und vorteilhaft ist es jedoch, wenn dem Zwischentransport-Förderband für die Bandschritte eine Wegmeßeinrichtung zugeordnet ist, die an den Rechner angeschlossen ist. Es liegt ein Positionierantrieb vor, bei dem die Wegmeßeinrichtung jeden Bandschritt ständig mißt und das Meßergebnis laufend an den Rechner gibt, der das Förderband stillsetzt, wenn der gemessene Istwert gleich dem vorgegebenen Bandschrittweite-Sollwert ist. Dabei sind die Geschwindigkeit und die Zeitspanne der Bandschritte weniger beachtlich.

Besonders zweckmäßig und vorteilhaft ist es weiterhin, wenn ein Entladeantrieb für die Hin- und Herbewegung des Entlade-Greiferkopfes und ein Stapelantrieb für die Hin- und Herbewegung des Stapel-Greiferkopfes vorgesehen sind und wenn der Entladeantrieb und der Stapelantrieb mit dem Rechner über Steuerleitungen verbunden sind. Der Rechner steuert also die Bandschritte passend zu der durch den Pressentakt vorgegebenen Hin- und Herbewegung des Entlade-Greiferkopfes und zu der durch das Ankommen der Stapelgruppen bedingten Hin- und Herbewegung des Stapel-Greiferkopfes.

In der Zeichnung ist eine bevorzugte Ausführungsform der Erfindung dargestellt und zeigt
- Fig. 1: schematisch eine Draufsicht auf eine Vorrichtung zum Umordnen von Steinformlingen wechselnder Formate und
- Fig. 2-4: jeweils eine Folge von Steinformling-Reihen mit verschiedenen Abständen dieser Reihen voneinander.

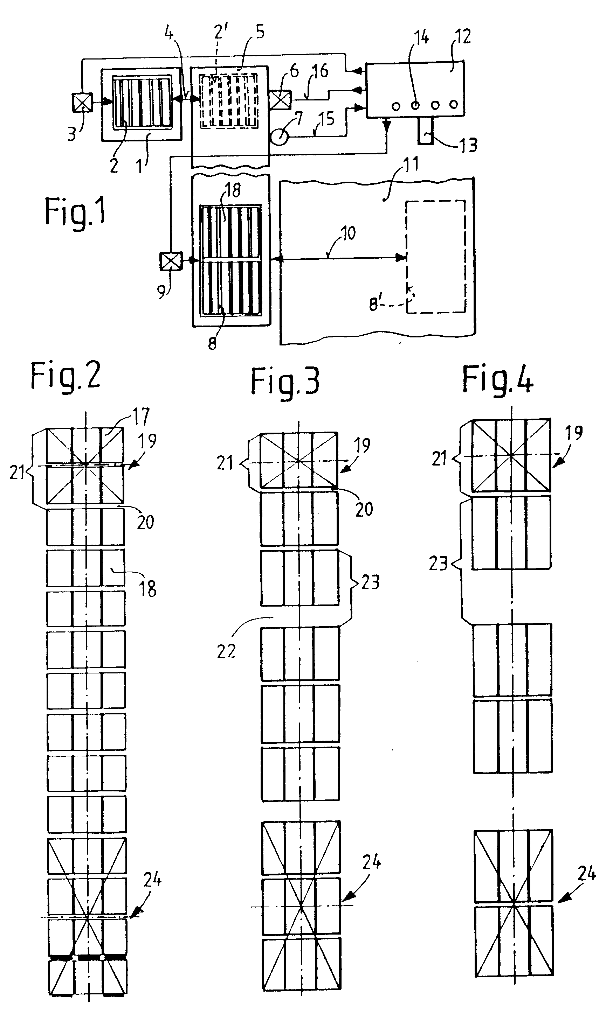

Die Vorrichtung gemäß Fig. 1 umfaßt eine Formpresse 1, in der ein Entlade-Greiferkopf 2 Steinformlinge aufnimmt und mittels eines Entladeantriebs 3 gemäß einem Doppelpfeil 4 hin- und herverschiebbar ist. Der Entlade-Greiferkopf 2 wird dabei in eine gestrichelt dargestellte Position 2 über einem Zwischentransport-Förderband 5 gebracht, das mittels eines Bandantriebes 6 schrittweise angetrieben wird und dem eine Wegmeßeinrichtung 7 zugeordnet ist. Das Zwischentransport-Förderband 5 bringt die Steinformlinge zu einem Stapel-Greiferkopf 8, der mittels eines Stapelantriebs 9 gemäß einem Doppelpfeil 10 hin-und herverschiebbar ist und dabei in eine gestrichelt dargestellte Position 8 über eine Setzplattform 11 bringbar ist. Die Vorrichtung umfaßt einen Rechner 12, der ein Programm 13 aufgenommen hat und mit Format-Einstelltasten 14 versehen ist. Der Rechner 12 nimmt über eine Datenleitung 15 die Meßergebnisse der Wegmeßeinrichtung auf und steuert über Steuerleitungen 16 den Bandantrieb 6, den Entladeantrieb 3 und den Stapelantrieb 9.

Die Vorrichtung gemäß Fig. 1 legt auf das Zwischentransport-Förderband 5 eine in Fig. 2 gezeigte bekannte Folge von Reihen 17 von Steinformlingen 18, wobei eine durch ein Kreuz gekennzeichnete Pressengruppe 19 zwei solcher Reihen umfaßt. Jede Pressengruppe 19 besitzt zu der vorhergehenden in bekannter Weise einen gleichen Abstand 20. Es ist eine Transportstrecke durch ein ganzzahliges Vielfaches von gleichen Bandschritten 21 bestimmt, die sich jeweils aus der Längsabmessung der Pressengruppe 19 und dem Abstand 20 zusammensetzen. Gemäß Fig. 3 ist die Längsabmessung einer Pressengruppen 19 kleiner als bei Fig. 2 und ist ein kleiner Abstand 20 zwischen zwei benachbarten Pressengruppen 19 vorhanden, was einem kleineren Bandschritt 21 entspricht; jedoch ist zwischen jeder dritten und vierten Pressengruppe ein großer Abstand 22 vorgesehen, was einem großen Bandschritt 23 entspricht. Gemäß Fig. 4 folgt jeder ersten Pressengruppe ein kleiner Abstand und jeder zweiten Pressengruppe ein großer Abstand, so daß jedem kleinen Bandschritt 21 ein großer Bandschritt 23 folgt. Am zweiten Ende der in Fig. 2-4 gezeigten Folgen ist jeweils eine durch ein Kreuz gekennzeichnete Stapelgruppe 24 vorgesehen, die jeweils zwei oder drei Pressengruppen umfaßt.

Der Bandantrieb 6 ist in der Drehzahl veränderbar und läßt sich zumindest auf eine größere Drehzahl und eine verminderte Drehzahl steuern. Der größere Teil jedes Bandschrittes wird bei der größeren Drehzahl zurückgelegt und ein kleinerer Endbereich jedes Bandschrittes wird bei der verminderten Drehzahl zurückgelegt. Hierdurch ist der Überlauf zwischen dem Abschalten des Bandantriebs und dem Stillstand des Förderbandes vermindert. Hierdurch ist berücksichtigt, daß das Förderband bei wechselnden Steinformling-Formaten auch mit wechselnden Massen beladen ist. Durch die Drehzahlregelbarkeit des Bandantriebs ist eine genauere Positionierbarkeit des Förderbandes erreicht.

## Patentansprüche

1. Vorrichtung zum Umordnen von Steinformlingen wechselnder Formate und Anordnungen,
bei der ein einen Entlade-Greiferkopf (2) aufweisendes Entladegerät zwischen einer Formpresse (1) und einem Zwischentransport-Förderband (5) vorgesehen ist und die Steinformlinge (18) in, der Formpresse entnommenen, einander folgenden Pressengruppen (19) auf dem Förderband an dessen erstem Ende ablegt,
bei der das Förderband sich nach jedem Ablegen einer Pressengruppe von Steinformlingen mittels eines Bandantriebs (6) um einen Bandschritt weiterbewegt, wobei die Bandschrittweite (21, 23) in Anpassung an das jeweilige Steinformling-Format einstellbar ist,
bei der ein einen Stapel-Greiferkopf (8) aufweisendes Stapelgerät zwischen dem Zwischentransport-Förderband und einer Setzplattform (11) vorgesehen ist und die Steinformlinge in, dem Förderband entnommenen, einander folgenden Stapelgruppen (24) von dem Förderband an dessen zweiten Ende abnimmt, und
bei der der Bandantrieb (6) über eine Steuereinrichtung schrittweise in Abhängigkeit von einem Programm, (13) eines Rechners (12) arbeitet, in dem verschiedene Steinformling-Formate verschiedenen Bandschrittweiten (21, 23) zugeordnet sind,
**dadurch gekennzeichnet**,
daß auf dem Programm (13) einigen Formaten den Pressengruppen (19) folgend abwechselnd kleinere und größere Bandschrittweiten (21, 23) zugeordnet sind und die größere Bandschrittweite (23) nach jeder Stapelgruppe (24) vorgesehen ist, wobei die jeweiligen Bandschrittweiten (21, 23) durch Betätigen von Format-Einstelltasten (14) einstellbar sind.

2. Vorrichtung nach Anspruch 1, **dadurch gekennzeichnet**, daß der Entlade-Greiferkopf (2) an einem Kopfgestell Greifer trägt, die an einem Kopfgestell mittels Schrauben in verschiedenen Anordnungen anbringbar sind und von dem Kopfgestell entfernbar sind.

3. Vorrichtung nach Anspruch 1 oder 2, **dadurch gekennzeichnet**, daß ein Satz von Stapel-Greiferköpfen (8) mit Greifern in verschiedenen Anordnungen vorgesehen ist.

4. Vorrichtung nach Anspruch 1, 2 oder 3, **dadurch gekennzeichnet**, daß dem Zwischentransport-Förderband (5) für die Bandschritte (21, 23) eine Wegmeßeinrichtung (7) zugeordnet ist, die an den Rechner (12) angeschlossen ist.

5. Vorrichtung nach einem der vorhergehenden Ansprüche, **dadurch gekennzeichnet,** daß ein Entladeantrieb (3) für die Hin- und Herbewegung des Entlade-Greiferkopfes (2) und ein Stapelantrieb (9) für die Hin- und Herbewegung des Stapel-Greiferkopfes (8) vorgesehen sind, und daß der Entladeantrieb (3) und der Stapelantrieb (9) mit dem Rechner (12) über Steuerleitungen (16) verbunden sind.

6. Vorrichtung nach einem der vorhergehenden Ansprüche, **dadurch gekennzeichnet**, daß der Bandantrieb (6) bei jedem Bandschritt im wesentlichen bis zum Ende des Bandschrittes getrieben arbeitet und daß der Bandantrieb für einen Endbereich jedes Bandschrittes auf eine verminderte Drehzahl gesteuert ist.

## Claims

1. Device for rearranging stone mouldings of varying sizes and layouts,
in which a discharge device comprising a discharge gripper head (2) is provided between a moulding press (1) and an intermediate transport conveyor belt (5) and deposits the stone mouldings (18) on the conveyor belt at the first end thereof, in successive press groups (19) taken from the moulding press,
in which the conveyor belt moves on by one belt step by means of a belt drive (6) after each deposition of a press group of stone mouldings, wherein the belt step length (21, 23) is variable in adaptation to the respective stone moulding size,
in which a stacker comprising a stack gripper head (8) is provided between the intermediate transport conveyor belt and a deposition platform (11) and takes the stone mouldings off the conveyor belt at the second end thereof in successive stack groups (24) taken from the conveyor belt, and
in which the belt drive (6) operates stepwise by means of a control device as a function of a programme (13) of a computer (12) in which different stone moulding sizes are assigned to different belt step lengths (21, 23),
characterised in that
on the programme (13) smaller and larger belt step lengths (21, 23) are assigned to some sizes alternately following the press groups (19) and the larger belt step length (23) is provided after each stack group (24), wherein the respective belt step lengths (21, 23) are variable by actuation of size adjusting keys (14).

2. Device according to claim 1, characterised in that the discharge gripper head (2) carries, on a head frame, grippers which can be mounted on a head frame in different layouts by means of bolts and can be removed from the head frame.

3. Device according to claim 1 or 2, characterised in that a set of stack gripper heads (8) with grippers in different layouts is provided.

4. Device according to claim 1, 2 or 3, characterised in that associated with the intermediate transport conveyor belt (5) for the belt steps (21, 23) is a distance measuring device (7) which is connected to the computer (12).

5. Device according to any of the preceding claims, characterised in that a discharge drive (3) for reciprocation of the discharge gripper head (2) and a stacking drive (9) for reciprocation of the stack gripper head (8) are provided and in that the discharge drive (3) and the stacking drive (9) are connected to the computer (12) by control cables (16).

6. Device according to any of the preceding claims, characterised in that the belt drive (6) at each belt step is essentially driven till the end of the belt step and in that the belt drive is regulated to a reduced speed for an end region of each belt step.

## Revendications

1. Dispositif servant à réarranger des préformes de briques ayant des formats et dispositions variables, dans lequel un appareil de déchargement présentant une tête de déchargement à griffes (2) est prévu entre une presse à mouler (1) et une bande transporteuse (5) de transport intermédiaire et dépose les préformes de briques (18), en groupes de moulage successifs (19), prélevés dans la presse à mouler, sur la bande transporteuse, à la première extrémité de cette bande,
dans lequel, après chaque dépose d'un groupe de moulage de préformes de briques, la bande transporteuse est avancée d'un pas de bande sous l'action d'un dispositif moteur de bande (6), la longueur (21, 23) du pas de bande pouvant être réglée pour s'adapter au format considéré des préformes de briques, dans lequel un appareil d'empilement possédant une tête d'empilement à griffes (8) est prévu entre la bande transporteuse de transport intermédiaire et une plate-forme de repos (11), et reprend sur la bande transporteuse les préformes de briques, en groupes d'empilement successifs (24) prélevés sur la bande transporteuse, à la deuxième extrémité de celle-ci, et
dans lequel le dispositif moteur (6) de la bande travaille pas-à-pas, sous l'action d'un dispositif de commande, en fonction d'un programme (13) d'un ordinateur (12) dans lequel différents formats de préformes de briques sont associés à différentes longueurs de pas de bande (21, 23),
caractérisé
en ce que, sur le programme (13), des longueurs de pas de bande successives (21, 23) alternativement petites et grandes, sont associées à certains formats des groupes de moulage (19), et la grande longueur de pas de bande (23) est prévue en fonction de chaque groupe d'empilement (24),
les différentes longueurs de pas de bande (21, 23) pouvant être réglées par la manoeuvre de touches (14) de réglage du format.

2. Dispositif selon la revendication 1, caractérisé en ce que la tête de déchargement à griffes (2) porte, sur un châssis de tête, des griffes qui peuvent être fixées au châssis de tête dans différentes dispositions au moyen de vis et qui peuvent être séparées du châssis de tête.

3. Dispositif selon la revendication 1 ou 2, caractérisé en ce qu'il est prévu un jeu de têtes à griffes d'empilement (8) munies de griffes placées dans différentes dispositions.

4. Dispositif selon la revendication 1, 2 ou 3, caractérisé en ce qu'un dispositif de mesure de distances (7) qui est connecté à l'ordinateur (12) est associé à la bande transporteuse de transport intermédiaire (5) pour la mesure despas de bande (21).

5. Dispositif selon une des revendications précédentes, caractérisé en ce qu'un dispositif moteur de déchargement (3) est prévu pour le déplacement alternatif de la tête de déchargement à griffes (2), et un dispositif moteur d'empilement (9) est prévu pour le déplacement alternatif de la tête d'empilement à griffes (8), et en ce que le dispositif moteur de déchargement (3) et le dispositif moteur d'empilement (9) sont connectés à l'ordinateur (12) par des lignes de commande (16).

6. Dispositif selon une des revendications précédentes, caractérisé en ce qu'à chaque pas de la bande, le dispositif moteur (6) de la bande travaille avec entraînement positif sensiblement jusqu'à la fin du pas de la bande et en ce que le dispositif moteur de la bande est commandé à une vitesse de rotation réduite pour la zone finale de chaque pas de la bande.
